# EUROPEAN PATENT SPECIFICATION

(11) **EP 3 552 865 B1**
(45) Date of publication and mention of the grant of the patent: **02.12.2026**
(21) Application number: 19168795.3
(22) Date of filing: 11.04.2019
(51) Int. Cl.: B60L 53/36

(54) **CONTROL METHOD FOR A RECHARGE SYSTEM FOR AN ELECTRIC VEHICLE**
STEUERVERFAHREN FÜR EIN AUFLADESYSTEM FÜR EIN ELEKTRISCHES FAHRZEUG
PROCÉDÉ DE COMMANDE D'UN SYSTÈME DE RECHARGE POUR UN VÉHICULE ÉLECTRIQUE

(30) Priority: 11.04.2018 IT 201800004406
(43) Date of publication of application: 16.10.2019
(73) Proprietor: Iveco S.p.A., 10156 Torino (IT)
(72) Inventor: AIMO BOOT, Marco, 10072 Caselle Torinese (TO) (IT)
(74) Representative: Studio Torta S.p.A.

(56) References cited:
- US-A1- 2017 008 411
- US-A1- 2017 050 526
- US-A1- 2017 305 287

## Description

### TECHNICAL FIELD

The invention relates to a control method for a recharge system for an electric vehicle, more in particular to a control method for a recharge system of an electric vehicle for the transportation of people, such as a bus.

### KNOWN STATE OF THE ART

The use of low-emission vehicles for the transportation of people is an increasingly felt need due to the greater and greater sensitivity towards environmental issues and to the desired reduction in the use of internal combustion engines.

To this aim, partially or totally electric vehicles are used, which comprise a battery system that periodically needs to be charged.

This battery system can be charged by means of suitable charging systems, for instance an electric cable provided with a suitable CC charging plug, in the yards of public transportation companies, controlled by dedicated employees; however, due to the numerous variables playing a role in public transportation, such as traffic or the number passengers, which can suddenly change, there is the need to have charging systems comprising charging stations for the electric battery systems located in different points of the area. In this way, bus drivers can charge, when needed, the battery system in the closest charging stations.

There are multiple types of automatic charging stations for bus electric battery systems, which usually comprise a support element or "totem" configured to support an arm with one single degree of freedom, comprising an electric charging element, usually a vertically movable pantograph (on the vehicle side or on the charging infrastructure side), which is designed to be coupled to conductive elements fixed on the roof of the bus so as to allow the latter to be statically charged. The electric charging element is connected to a high-voltage energy source, which allows the battery pack to be charged in a few minutes.

Examples of these charging stations can be Opbrid Busbaar ^{®} or WATT ^{®} system PVI.

The above-mentioned systems cannot be automated, as they are configured to reach, without human intervention, the multiple events which can occur during the electric recharge of the bus.

Furthermore, these systems do not ensure the recharge of the vehicle without a precise positioning of the vehicle and a perfect contact between the recharge station and the bus.

Other attempts to provide methods for recharge systems for electrical batteries of vehicles are disclosed in documents US2017/008411 A1 or US2017305287 A1.

In particular, US2017008411 discloses a battery charging apparatus comprising a charging body, a robot arm, and a feeding coupler.

US2017305287 discloses a method for assisting the positioning of an electric vehicle, provided with energy storage structure, with respect to a recharging station for power transfer.

Hence, there is a strong need for an improvement in the control methods for recharge systems of bus electric battery systems, which allow the battery system to be charged in an effective and automatic manner.

The object of the invention is to fulfil the needs discussed above in an economic and completely automated manner.

### SUMMARY OF THE INVENTION

The aforesaid object is reached by a means of a control method for a recharge system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a perspective view of part of a recharge station of a recharge system for a vehicle for the transportation of people in a first operating step;
- figure 2 shows a perspective view of the station of figure 1 in a second operating step;
- figure 3 is a cross-section view of an element of the part of recharge station of figures 1 and 2, in a first operating step;
- figure 4 is a cross section view of the element of figure 3, in a second operating step;
- figures 5, 6 and 7 show different steps of the operation of a recharge system according to the invention; and
- figure 8 is a diagram showing steps of a control method to according to the invention for a recharge system for a vehicle.

### DETAILED DESCRIPTION OF THE INVENTION

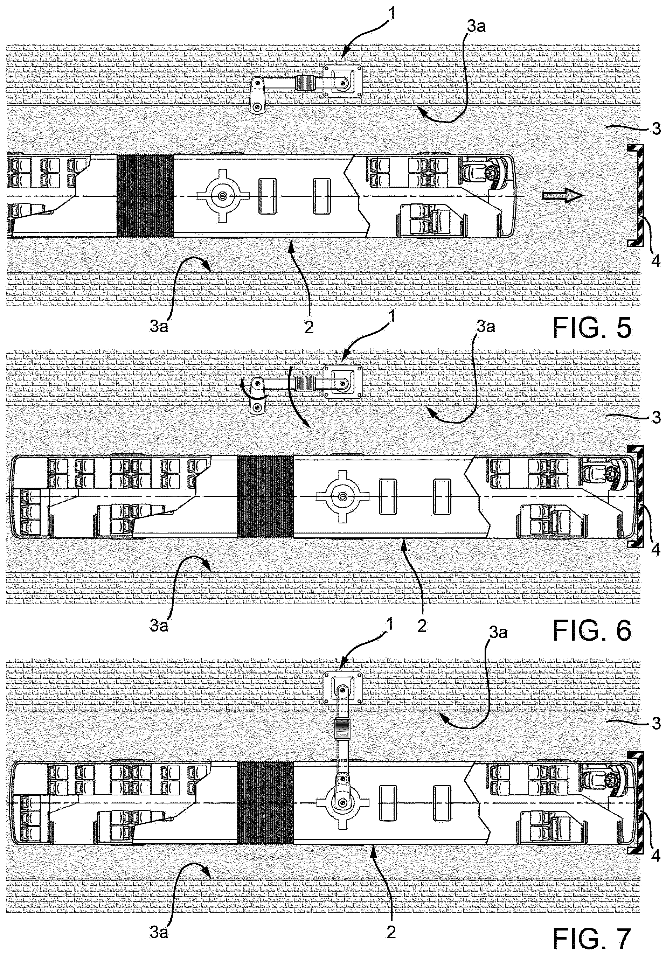

Figures 5 to 7 show a recharge system comprising a recharge station 1 for a bus 2, which is located on one of the edges 3a of a road 3 where the bus 2 drives. The bus 2 can be any bus provided with an electric battery system comprising at least one electric battery designed to store electric energy which can be used to enable the total or partial electric drive of the bus 2.

The road 3 comprises stop means 4 configured to allow the driver of the bus 2 to identify the correct positioning of the latter relative to the recharge station 1 along the road 3. The stop means 4 can advantageously be known stripes painted along the road 3.

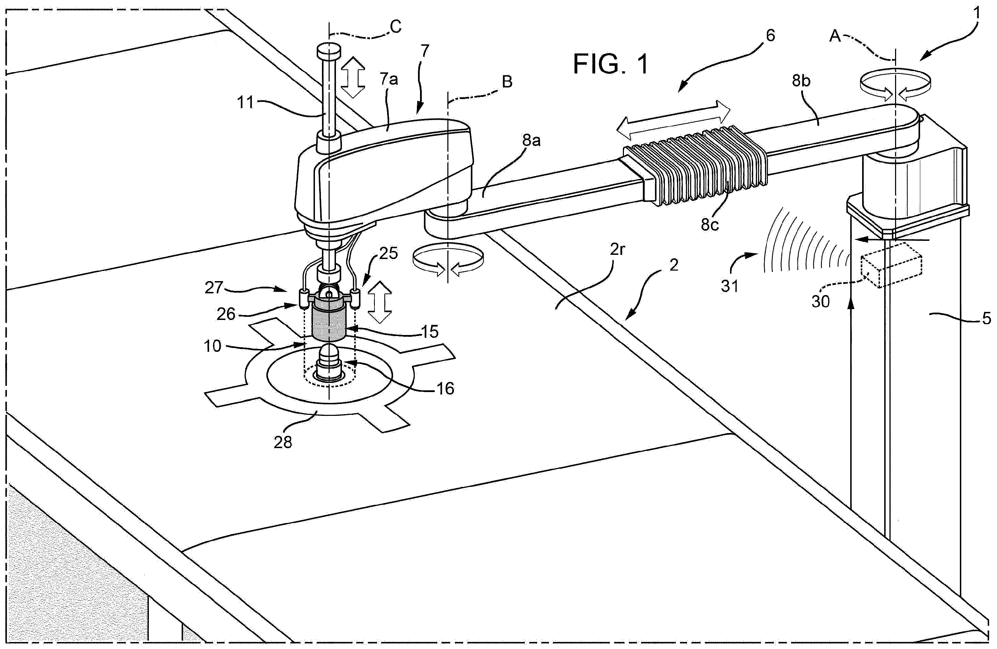

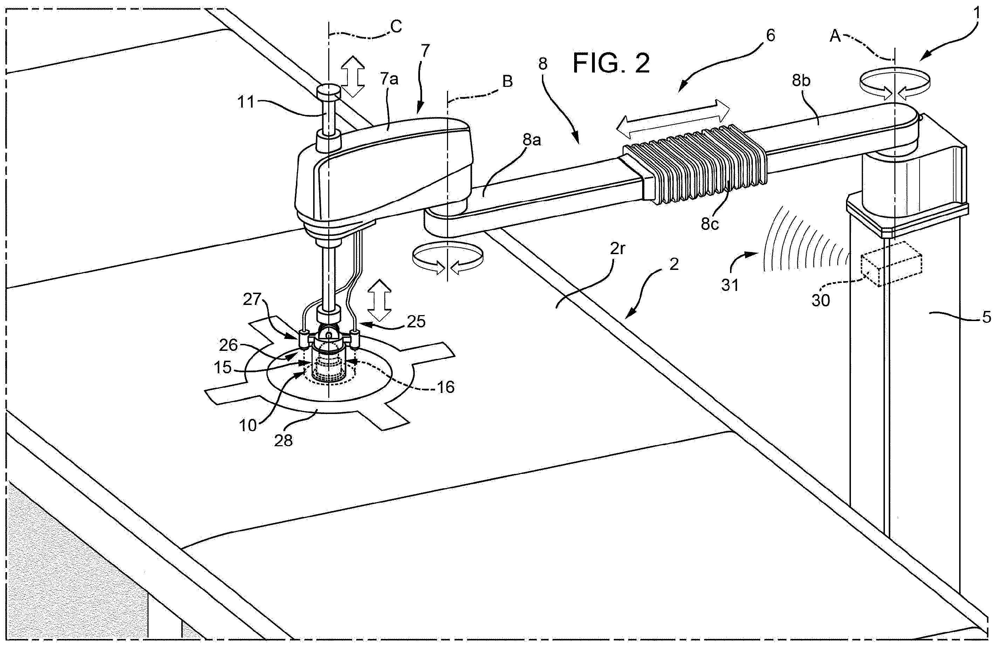

The recharge station 1 comprises (figures 1 and 2) a support element 5, which is fixed, for example by means of fixing means, such as bolts, or hinged along the edge 3a of the road 3, and a mobile arm 6, which is carried by the support element 5. The support element 5 can have any shape, obviously with a greater height than the height of a roof 2r of the bus 2 and defining a longitudinal axis A. The support element 5 preferably is a box-like element with the shape of a prism substantially developing along the longitudinal axis A.

The movable arm 6 preferably comprises an end head 7 and an intermediate element 8 configured to carry the head 7 and connected in a movable manner relative to the support element 5.

The intermediate element 8 is configured in such a way that an end portion 8a carrying the head 7 has at least two degrees of freedom of movement relative to the support element 5. For example, the intermediate element 8 can comprise an element with a longitudinal development, for example a box-like element with shape of a prism, which can be carried in a rotary manner at a further end portion 8b defining a hinge with axis A relative to the support element 5; the intermediate element 8 can further comprise an extendible portion 8c configured to change the longitudinal extension of the intermediate element 8 so that the horizontal distance between the end portion 8a and the end portion 8b can change from a preferable minimum value, equal to at least half the width of the vehicle plus the distance of the vehicle from the hard shoulder, for example 3275 mm, to a maximum value of 4550 mm, more preferably 5550 mm.

The extendible portion 8c can be obtained in a known manner, for example by means of a hydraulic piston or a mechanical device configured to extend, when operated, and covered by an extendible bellows cover 9 in order to allow the extendible portion to extend from the minimum value to the maximum value of the intermediate element 8.

The head 7 comprises a main body 7a provided with electric connection means 10 and carried by the intermediate element 8 so that said connection means 10 have two further degrees of freedom of movement relative to it. In particular, the main body 7a of the head 7 can be carried on the intermediate element 8 in a rotary manner defining a hinge with axis B, parallel to the axis A, relative to the latter and the connection means 10 can slide along an axis C, parallel to the axis B, relative to the main body 7a of the head 7.

This sliding along the axis C can be carried out by means of a rod 11, which carries, at an end of its, the connection means 10, is inserted, in a mobile manner, in a seat obtained in the main body 7a of the head 7 and is operated in a known manner, for example mechanically or hydraulically. Hence, by so doing, the rod 11 can define an upper limit stop, where the connection means define the minimum distance from the main body 7a of the head 7, and a lower limit stop, where the connection means 10 define the maximum distance from the main body 7a of the head 7.

The connection means 10 are configured to allow a high-voltage source (not shown), preferably ranging between 400 and 800 V in direct current, to be connected to the battery system (not shown) of the vehicle 2.

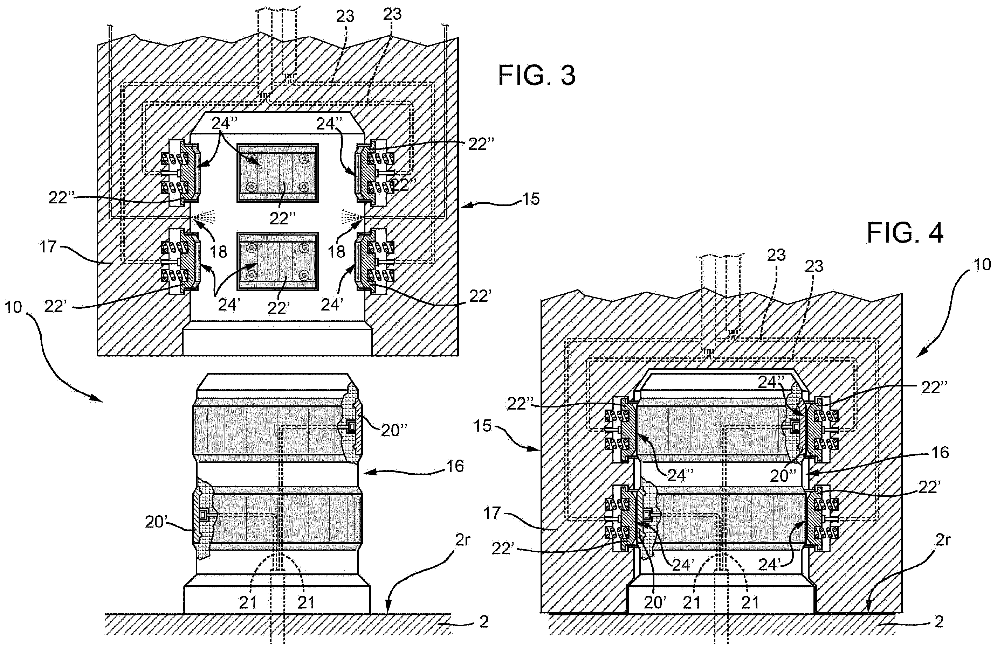

In particular, according to figures 3 and 4, the connection means 10 can comprise a first connection element 15 carried by the head 7 and configured to cooperate with a second connection element 16 carried by the bus 2, preferably on the roof 2r.

In the example described herein, the first connection element 15 comprises a casing 17 with an annular cylindrical shape configured to be fitted around the second connection element 16, which consequently has a substantially cylindrical shape and extends perpendicularly from the roof 2r of the bus 2.

The second connection element 16 can comprise two poles 20', 20", a positive pole and a negative pole, respectively, possibly configured as rings spaced apart from one another by an electrically insulating material and electrically connected to the battery system of the vehicle by means of respective wires 21.

The first connection element 15 comprises a first and a second contact means 22', 22" for the poles 20' and 20'', respectively, which are configured to selectively come into contact with the respective pole 20', 20'' when they are operated.

The contact means 22', 22" are electrically connected to the high-pressure source by means of respective wires 23 extending inside the head 7, the intermediate element 8 and the support element 5. When they come into contact with the respective pole 20', 20'', the contact means 22', 22" allow the high-voltage source to be connected to the battery system of the vehicle 2.

As a consequence of the preferred shape of the poles 20', 20", the contact means 22', 22" can be manufactured as a pair of semicircular walls 24', 24'' which are movable relative to the casing 17 between a first non-contact position relative to the second connection element 16 and a second contact position in contact with the poles 20', 20" of the second connection element 16.

The walls 24', 24" are preferably connected in a movable manner to the inner wall of the casing 17 by means of elastic means, for example helical pins, which are configured to define a pre-set contact load when the second connection element 16 is inserted inside the casing 17. Alternatively, the movable parts can be moved by means of linear electromechanical actuators with force-current reaction control. Electronic control means of the recharge station, as described more in detail below, can be configured to control and maintain the force of the contact (acting upon the current control) compensating, when necessary, possible wears and/or thermal expansions arising in case of high current flows.

The connection means 10 can be further provided with cleaning means configured to clean the inside of the casing 17 (when it is not coupled to the second connection element 16) or the connection element 16 itself, when it is coupled. Said cleaning means can comprise compressed air blowers 18, which are fluidically connected to a compressed air source carried, for example, by the recharge station 1, through an electric compressor.

The connection means 10 can further comprise localisation means 25 configured to enable an automatic recognition of the relative position of the second connection element 16 carried by the bus 2 relative to the recharge station 1.

The localisation means 25 preferably comprise laser means 26 and RFID means 27 respectively configured to enable the recognition of the environment surrounding the connection means 10, a precise identification, when the vehicle is still, of the position of the second connection element 16 and an unambiguous identification of the bus 2.

In particular, the laser means 26 comprise range finder laser devices configured to capture the distance between their position and a framed objective, for example the roof 2r of the bus 2 or a highlighted area 2u relative to the roof 2r.

The RFID sensors 27 preferably comprise RF antennas and a tag reader, which are configured to capture the position of an RFID tag 28 located close to the second connection element 16.

The recharge station 1 further comprises sensor means (not shown), which are configured to detect impact and/or fire situations.

In particular, the sensor means can comprise acceleration sensors configured to capture sudden changes in the acceleration of the components of the mobile arm 6 and fire sensors located close to the contact means 22', 22" and configured to capture possible fires caused by a short-circuit between the contact means 22', 22'' and the poles 20', 20".

The recharge station 1 further comprises electronic means 30, for example a known electronic control unit, comprising communication means 31, for example through wireless signals, configured to exchange signals with the bus 2, with the localisation means 25 and with the above-mentioned sensor means.

The electronic means 30 further comprise processing means configured to store and process the aforementioned signals so as to control actuators configured to operate the movements of the mobile arm 6. In particular, according to the embodiment described herein, said actuators operate the movements along and/or around the axes A, B, E, and the extension of the portion 8c, so that the connection means 10 are correctly placed above the second connection element 16.

The electronic means 30 are further configured to control the release of voltage from the high-voltage source to the battery system of the vehicle 2 according to the method described more in detail below.

The electronic means 30 can be connected, through the communication means 31 or, for example, via cable to a remote control station configured to receive signals from a plurality of control stations 1 connected to one another and to send control instructions to the electronic means 30.

The operation of the recharge station 1 described above is the following:
According to figure 3, a bus 2 approaches a recharge station 1. While it approaches the station, the signals sent by the bus 2 are received by the telecommunication means 31 of the electronic means 30 of the recharge station 1, which activates a first step of preliminary controls, as described more in detail below.

In a second operating step, during which the bus 2 is correctly positioned relative to the stop means 4, the electronic means 30, after having received the signals from the localisation means 25 and from the other sensor means and after having processed them accordingly, controls the actuators in such a way that the mobile arm 6 is positioned so that the head 7 is located with the connection means 10 above the second connection element 16. After having identified the correct centring position between the connection means 10 and the second connection element 16, the connection means 10 are coupled to the connection element 16 so that the pairs of walls 24', 24" are in contact, with a correct pre-load, with the respective poles 20', 20''.

In a third operating step, when the connection means 10 are coupled to the connection element 16, the electronic means 30 carry out second functional checks before performing the electric recharge, as described more in detail below.

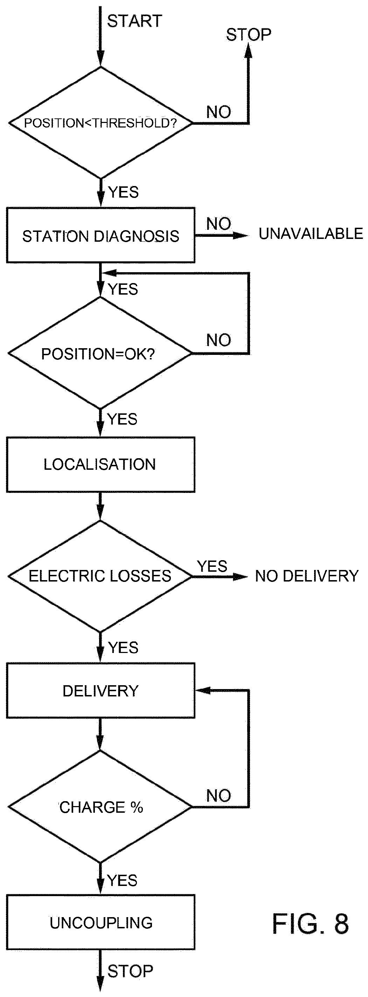

The recharge station 1 is controlled by the electronic means 30 according to the method according to the invention, which is schematically shown in figure 8.

The bus sends to the electronic means 30 a signal concerning the arrival time and/or the distance from the recharge station 1 and the electronic means 30 evaluate whether said time/distance is greater or smaller than a pre-set time/distance. If so, a step of self-diagnosis the recharge station 1 is activated, otherwise the recharge station 1 waits for a further signal from the bus 2 until the activation of said diagnosis step.

The diagnosis step involves checking the operation of the actuators of the mobile arm 6, checking the connection to the voltage source and the available power, checking the localisation means 25 and the other sensor means and the use of the localisation means 25, in particular of the laser means 26, in order to check for the presence of obstacle elements (e.g. branches) in the range of action of the mobile arm 6, or even measuring the electric insulation of the connection means 22', 22".

When the bus 2 is positioned along the road 3 close to the stop means 4, this item of information is sent to the electronic means 30, for example the bus 2 can communicate the fact that it is in "parking" mode or that the parking brake was activated, which is an essential condition to activate the recharge procedure.

At this point the step of locating the connection element 16 of the bus 2 can start. This localisation is carried out by the localisation means 25, which are configured to acquire the position of the mobile arm 6 in the environment and the distance between the head 7 of the latter and the connection element 16. These items of information are acquired in real time by the electronic means 30, which are configured to process these items of information so as to control the actuators of the mobile arm 6 in such a way that the electric connection means 10 are mechanically coupled to the connection element 16.

Once the connection means 10 are coupled to the connection element 16, the electronic means 30 start an electric contact diagnosis step, during which the electric resistance between the poles and between each pole and the ground is measured by means of the contact means 20', 20". This measure provides an estimation of possible current dispersions and the energization of the contact means 20', 20" is inhibited in case these electric dispersions are detected.

When the diagnosis step produces a positive result, the electronic means 30 enable the connection between the high-voltage source and the battery system of the vehicle 2 by energizing the contact means 22', 22'', which are in contact with the poles 20', 20'', which, in turn, are connected to the battery system, which is charged.

This step of charging the battery system of the vehicle 2 can be interrupted when the driver decides to disconnect the recharge through a suitable signal to be sent to the recharge station 1, when a pre-set percentage, for example a 100% charge, is reached or after a pre-set charging time defined based on the minimum time of stay of the vehicle 22 in charge. The battery control unit (BMS) of the vehicle 2 can further transfer, through the communication means 31, to the electronic means 30 of the recharge station 1 a series of parameters useful for the management of the fleet of vehicles using said station 1. The transfer of data is completed before the mobile arm 6 goes back to its initial position, therefore without affecting the total charging times.

At the end of this step, the electronic means 30 control the actuators of the arm 6 so as to uncouple the connection means 10 from the second connection element 16 of the vehicle 2 and go back to an initial rest position.

Safety checks are carried out in parallel to the recharge step of the method for controlling the recharge station 1 described above.

A first parallel check involves checking whether the vehicle 2 has hit a mobile element. In this case, the acceleration sensor means of the mobile arm 6 transmit an acceleration signal to the electronic means 30, which evaluate whether it exceeds a pre-set acceleration threshold value and inhibit the connection between the voltage source and the control means 20', 20'' accordingly.

A second parallel check is a fire check due, for example, to a sudden short circuit in the connection means 10. The fire sensors evaluate a possible fire ignition and transmit an acceleration signal to the electronic means 30, which, in turn, evaluate whether to inhibit the connection between the voltage source and the contact means 20', 20'' accordingly.

During the connection and disconnection step carried out to connect and disconnect the connection means 10 there can be an intermediate cleaning step to clean the first and the second connection element 15, 16. In this case, the electronic means 30 activate the blowers so as to enable the delivery of compressed air on the poles 20', 20'' and the contact means 22', 22".

After the charge of the battery system of the vehicle 2 has been completed, the electronic means 30 are further configured to store data concerning the use of the elements of the recharge station, so as to build a history of the uses of each element.

In particular, it is possible to store the number and the duration of the manoeuvres of each actuator of the mobile arm, the number of cleaning cycles of the first and/or second connection element 15, 16, statistics concerning the presence of obstacles in the range of action of the arm 6, the number and the type of faults, the count of the charging energy, the hours of activity and inactivity of the recharge station 1, the identification code and the number of the vehicles 2 charged and the number of emergencies identified (hits/fires).

The electronic means 30, periodically or when remotely requested to do so, can transmit the data stored to the remote management unit.

Owing to the above, the advantages of a control method for a recharge system according to the invention are evident.

The control method ensures a quick, safe and precise coupling of the connection means 10 to the connection element 16 of the vehicle 2, even when the vehicle 2 is not positioned in a precise manner relative to the recharge station 1. This allows vehicles 2 of different types to be charged by means of the same recharge station 1.

Furthermore, since there is no need for a precise alignment of the vehicle, there also is no need for an automatic or assisted alignment of the vehicle (the driver is supported by the system that detects the recharge area), which typically require suitable sensors on the side of the vehicle (video cameras and/or radars).

The recharge process is completely automated and takes into account possible sudden events (such as fires or hits due to incidents, presence of foreign elements), which might occur during the recharge of the vehicle 2.

Furthermore, The presence of cleaning step for the connection elements 15, 16 prevents impurities and/or dirt (for example small branches, waste, dust or any other foreign element) from jeopardizing the electric-mechanical contact between them.

The localisation step carried out by means of the range-finder laser technology, combined with the use of RFID means, allows the connection element 16 to be located in a precise and accurate manner and enables a recognition of the type of vehicle 2 of the vehicle 2 itself.

First of all, the recharge station 1 described above was disclosed by mere way of example and said recharge station 1 can be manufactured in a different manner.

Moreover, the plurality of safety checks could comprise further checks or the localisation step could be carried out differently.

## Claims

1. A control method for a recharge system for a battery system of a vehicle (2), said recharge system comprising a recharge station (1) comprising a support element (5) and a mobile arm (6) carried by said support element (5), said mobile arm comprising electric connection means (10) configured to be coupled with an electric connection element (16) carried by said vehicle (2) and electronic means (30) configured to receive information from said vehicle (2) and from sensors of said recharge station (1) via communication means (31) and control said mobile arm (6) by processing said information according to said method, comprising the steps of:
• evaluating whether the distance of said vehicle (2) from said recharge station (2) is less than a pre-set value;
• activating, when said distance is less than said pre-set value, a step of diagnosing the operation of said mobile arm (6);
• evaluating whether the positioning of the vehicle (2) in respect to said recharge station (2) is correct;
• activating, when said positioning is correct, a step of locating the electric connection element (16) in respect to said recharge station (1) and coupling said connection means (10) to said connection element (16);
• evaluating the presence of a correct electric coupling between said connection means (10) and said connection element (16);
• activating, when said electric coupling is confirmed, a step of delivering electricity to said connection means (10) and to said connection element (16);
• uncoupling, when the delivery step is completed, the connection means (10) from said connection element (16) and bringing the recharge station (1) to a position of rest
**characterised in that**
the step of diagnosing comprises checking the operation of actuators configured to move the mobile arm (6), checking the power and voltage connections of the recharge station (1), checking the sensors included by the recharge station (1), checking the electric insulation of the contact means (22', 22") of said connection means (10) and checking for the presence of obstruction elements in the range of action of said recharge station (1), and
**in that** said step of locating the electric connection element (16) in respect to said recharge station (1) and coupling of said connection means (10) to said connection element (16) comprises estimating, via laser-finder technology, the relative position of said connection means (10) and said connection element (16), said electronic means (30) processing of said estimation and the control of the actuators of said mobile arm (6) to enable said connection means (10) to be mechanically coupled to said connection element (16).

2. The control method according to claim 1, wherein the evaluation of the distance of said vehicle (2) from said recharge station (1) is an evaluation of spatial or temporary distance of said vehicle (2) in respect to said station (1), said vehicle (2) communicating a spatial distance or an expected arrival time to said recharge station (1) via said telecommunication means (31).

3. The control method according to one of the preceding claims, wherein the step of evaluating the correct positioning of the vehicle (2) comprises the acquisition by said electronic means (30) via said telecommunication means (31) of the activation of the parking brake or the parking function of the vehicle (2).

4. The control method according to one of the preceding claims, wherein said estimation via laser-finder technology of the relative position between said connection means (10) and said connection element (16) further comprises the use of RFiD technology.

5. The control method according to one of the preceding claims, wherein said step of checking the electric coupling between said connection means (10) and said connection element (16) comprises checking the resistance between the poles (20', 20") of said connection element (16) and between each of said poles (20', 20") and the ground.

6. The control method according to one of the preceding claims, wherein said delivery is completed when a driver of said vehicle stops said delivery when the charge percentage of said battery system of said vehicle (2) reaches a pre-set charge level, said pre-set charge level being communicated by said vehicle (2) to said electronic means (30) via said communication means (31).

7. The control method according to one of the preceding claims, wherein simultaneously to said delivery step, a plurality of security checks of said delivery are activated.

8. The control method according to claim 7, wherein said plurality of security checks of said delivery comprise a fire ignition check for said connection means (10) and said connection element (16) via respective sensors carried by said mobile arm (6) communicating via said communication means (31) with said electronic means (30), when said check is positive, said delivery step is interrupted by said electronic means (30).

9. The control method according to claim 7, wherein said plurality of safety checks of said delivery comprises an impact check, received by said vehicle (2) via acceleration sensors carried by said mobile arm (6) communicating via said communication means (31) with said electronic means (30), when said check is positive, said delivery step is interrupted by said electronic means (30).

10. The control method according to one of the preceding claims, wherein, before said coupling between said connection means (10) and said connection element (16) an automatic cleaning step of said connection means (10) and said connection element (16) is carried out.

11. The control method according to one of the preceding claims, comprising the further step of storing data relative to the use of the elements of said recharge station (1).

## Patentansprüche

1. Steuerverfahren für ein Wiederaufladesystem für ein Batteriesystem eines Fahrzeugs (2), welches Wiederaufladesystem eine Wiederaufladestation (1) umfasst, die ein Trägerelement (5) und einen beweglichen Arm (6) umfasst, der von dem Trägerelement (5) getragen wird, wobei der bewegliche Arm elektrische Verbindungsmittel (10), die konfiguriert sind, um mit einem elektrischen Verbindungselement (16) gekoppelt zu werden, das von dem Fahrzeug (2) getragen wird, und elektronische Mittel (30) umfasst, die konfiguriert sind, um Informationen von dem Fahrzeug (2) und von Sensoren der Wiederaufladestation (1) über Kommunikationsmittel (31) zu empfangen und den beweglichen Arm (6) durch Verarbeiten der Informationen gemäß dem Verfahren zu steuern, umfassend die folgenden Schritte:
- Bewerten, ob der Abstand des Fahrzeugs (2) von der Wiederaufladestation (2) kleiner als ein voreingestellter Wert ist;
- Aktivieren, wenn der Abstand kleiner als der voreingestellte Wert ist, eines Schritts des Diagnostizierens des Betriebs des beweglichen Arms (6);
- Bewerten, ob die Positionierung des Fahrzeugs (2) in Bezug auf die Wiederaufladestation (2) korrekt ist;
- Aktivieren, wenn die Positionierung korrekt ist, eines Schritts des Lokalisierens des elektrischen Verbindungselements (16) in Bezug auf die Wiederaufladestation (1) und des Koppelns der Verbindungsmittel (10) mit dem Verbindungselement (16);
- Bewerten des Vorhandenseins einer korrekten elektrischen Kopplung zwischen den Verbindungsmitteln (10) und dem Verbindungselement (16);
- Aktivieren, wenn die elektrische Kopplung bestätigt wird, eines Schritts des Lieferns von Elektrizität an die Verbindungsmittel (10) und an das Verbindungselement (16);
- Entkoppeln, wenn der Lieferschritt abgeschlossen ist, der Verbindungsmittel (10) von dem Verbindungselement (16) und Bringen der Wiederaufladestation (1) in eine Ruheposition,
**dadurch gekennzeichnet,**
**dass** der Schritt des Diagnostizierens das Prüfen des Betriebs von Aktuatoren umfasst, die konfiguriert sind, um den beweglichen Arm (6) zu bewegen, das Prüfen der Strom- und Spannungsverbindungen der Wiederaufladestation (1), das Prüfen der Sensoren, die in der Wiederaufladestation (1) enthalten sind, das Prüfen der elektrischen Isolierung der Kontaktmittel (22', 22") der Verbindungsmittel (10) und das Prüfen auf das Vorhandensein von Hinderniselementen im Wirkungsbereich der Wiederaufladestation (1), und
**dass** der Schritt des Lokalisierens des elektrischen Verbindungselements (16) in Bezug auf die Wiederaufladestation (1) und des Koppelns der Verbindungsmittel (10) mit dem Verbindungselement (16) das Schätzen der relativen Position der Verbindungsmittel (10) und des Verbindungselements (16) über Lasersuchertechnologie umfasst, wobei die elektronischen Mittel (30) die Schätzung und die Steuerung der Aktuatoren des beweglichen Arms (6) verarbeiten, um zu ermöglichen, dass die Verbindungsmittel (10) mechanisch mit dem Verbindungselement (16) gekoppelt werden.

2. Steuerverfahren nach Anspruch 1, wobei die Bewertung des Abstands des Fahrzeugs (2) von der Wiederaufladestation (1) eine Bewertung eines räumlichen oder zeitlichen Abstands des Fahrzeugs (2) von der Wiederaufladestation (1) ist, wobei das Fahrzeug (2) einen räumlichen Abstand oder eine erwartete Ankunftszeit an die Wiederaufladestation (1) über die Telekommunikationsmittel (31) kommuniziert.

3. Steuerverfahren nach einem der vorhergehenden Ansprüche, wobei der Schritt des Bewertens der korrekten Positionierung des Fahrzeugs (2) das Erfassen der Aktivierung der Feststellbremse oder der Parkfunktion des Fahrzeugs (2) durch die elektronischen Mittel (30) über die Telekommunikationsmittel (31) umfasst.

4. Steuerverfahren nach einem der vorhergehenden Ansprüche, wobei die Schätzung der relativen Position zwischen den Verbindungsmitteln (10) und dem Verbindungselement (16) über Lasersuchertechnologie ferner die Verwendung von RFiD-Technologie umfasst.

5. Steuerverfahren nach einem der vorhergehenden Ansprüche, wobei der Schritt des Prüfens der elektrischen Kopplung zwischen den Verbindungsmitteln (10) und dem Verbindungselement (16) das Prüfen des Widerstands zwischen den Polen (20', 20") des Verbindungselements (16) und zwischen jedem der Pole (20', 20") und der Masse umfasst.

6. Steuerverfahren nach einem der vorhergehenden Ansprüche, wobei die Lieferung abgeschlossen ist, wenn ein Fahrer des Fahrzeugs die Lieferung stoppt, wenn der Ladungsprozentsatz des Batteriesystems des Fahrzeugs (2) einen voreingestellten Ladungspegel erreicht, wobei der voreingestellte Ladungspegel von dem Fahrzeug (2) an die elektronischen Mittel (30) über die Kommunikationsmittel (31) kommuniziert wird.

7. Steuerverfahren nach einem der vorhergehenden Ansprüche, wobei gleichzeitig mit dem Lieferungsschritt eine Vielzahl von Sicherheitsprüfungen der Lieferung aktiviert werden.

8. Steuerverfahren nach Anspruch 7, wobei die Vielzahl von Sicherheitsprüfungen der Lieferung eine Feuerzündungsprüfung für die Verbindungsmittel (10) und das Verbindungselement (16) über jeweilige Sensoren umfasst, die von dem beweglichen Arm (6) getragen werden, der über die Kommunikationsmittel (31) mit den elektronischen Mitteln (30) kommuniziert, wobei, wenn die Prüfung positiv ist, der Lieferschritt durch die elektronischen Mittel (30) unterbrochen wird.

9. Steuerverfahren nach Anspruch 7, wobei die Vielzahl von Sicherheitsprüfungen der Lieferung eine Aufprallprüfung umfasst, die von dem Fahrzeug (2) über Beschleunigungssensoren empfangen wird, die von dem beweglichen Arm (6) getragen werden, der über die Kommunikationsmittel (31) mit den elektronischen Mitteln (30) kommuniziert, wobei, wenn die Prüfung positiv ist, der Lieferschritt durch die elektronischen Mittel (30) unterbrochen wird.

10. Steuerverfahren nach einem der vorhergehenden Ansprüche, wobei vor der Kopplung zwischen den Verbindungsmitteln (10) und dem Verbindungselement (16) ein automatischer Reinigungsschritt der Verbindungsmittel (10) und des Verbindungselements (16) durchgeführt wird.

11. Steuerverfahren nach einem der vorhergehenden Ansprüche, umfassend den weiteren Schritt des Speicherns von Daten in Bezug auf die Verwendung der Elemente der Wiederaufladestation (1).

## Revendications

1. Méthode de commande pour un système de recharge pour un système de batterie d'un véhicule (2), ledit système de recharge comprenant une station de recharge (1) comprenant un élément de support (5) et un bras mobile (6) porté par ledit élément de support (5), ledit bras mobile comprenant des moyens de connexion électrique (10) configurés pour être accouplés à un élément de connexion électrique (16) porté par ledit véhicule (2) et des moyens électroniques (30) configurés pour recevoir des informations en provenance dudit véhicule (2) et de capteurs de ladite station de recharge (1) via des moyens de communication (31) et commander ledit bras mobile (6) en traitant lesdites informations selon ladite méthode, comprenant les étapes suivantes :
• le fait d'évaluer si la distance dudit véhicule (2) par rapport à ladite station de recharge (2) est inférieure à une valeur préréglée ;
• l'activation, lorsque ladite distance est inférieure à ladite valeur préréglée, d'une étape de diagnostic du fonctionnement dudit bras mobile (6) ;
• le fait d'évaluer si le positionnement du véhicule (2) par rapport à ladite station de recharge (2) est correct ;
• l'activation, lorsque ledit positionnement est correct, d'une étape de localisation de l'élément de connexion électrique (16) par rapport à ladite station de recharge (1) et d'accouplement desdits moyens de connexion (10) audit élément de connexion (16) ;
• l'évaluation de la présence d'un accouplement électrique correct entre lesdits moyens de connexion (10) et ledit élément de connexion (16) ;
• l'activation, lorsque ledit accouplement électrique est confirmé, d'une étape de distribution d'électricité auxdits moyens de connexion (10) et audit élément de connexion (16) ;
• le désaccouplement, lorsque l'étape de distribution est terminée, des moyens de connexion (10) dudit élément de connexion (16) et la mise en position de repos de la station de recharge (1)
**caractérisé en ce que** l'étape de diagnostic comprend la vérification du fonctionnement d'actionneurs configurés pour déplacer le bras mobile (6), la vérification des connexions de puissance et de tension de la station de recharge (1), la vérification des capteurs inclus par la station de recharge (1), la vérification de l'isolation électrique des moyens de contact (22*'*, 22*"*) desdits moyens de connexion (10) et la vérification de la présence d'éléments d'obstruction dans la zone d'action de ladite station de recharge (1), et
**en ce que** ladite étape de localisation de l'élément de connexion électrique (16) par rapport à ladite station de recharge (1) et d'accouplement desdits moyens de connexion (10) audit élément de connexion (16) comprend l'estimation, par technologie de localisation laser, de la position relative desdits moyens de connexion (10) et dudit élément de connexion (16), le traitement desdits moyens électronique (30) de ladite estimation et la commande des actionneurs dudit bras mobile (6) pour permettre l'accouplement mécanique desdits moyens de connexion (10) audit élément de liaison (16).

2. Méthode de commande selon la revendication 1, dans laquelle l'évaluation de la distance dudit véhicule (2) par rapport à ladite station de recharge (1) est une évaluation d'une distance spatiale ou temporaire dudit véhicule (2) par rapport à ladite station (1), ledit véhicule (2) communiquant une distance spatiale ou une heure d'arrivée attendue à ladite station de recharge (1) via lesdits moyens de télécommunication (31).

3. Méthode de commande selon l'une des revendications précédentes, dans laquelle l'étape d'évaluation du positionnement correct du véhicule (2) comprend l'acquisition par lesdits moyens électroniques (30) via lesdits moyens de télécommunication (31) de l'activation du frein de stationnement ou de la fonction de stationnement du véhicule (2).

4. Méthode de commande selon l'une des revendications précédentes, dans laquelle ladite estimation par technologie de localisation laser de la position relative entre lesdits moyens de connexion (10) et ledit élément de connexion (16) comprend en outre l'utilisation d'une technologie RFiD.

5. Méthode de commande selon l'une des revendications précédentes, dans laquelle ladite étape de vérification de l'accouplement électrique entre lesdits moyens de connexion (10) et ledit élément de connexion (16) comprend la vérification de la résistance entre les pôles (20*'*, 20*"*) dudit élément de connexion (16) et entre chacun desdits pôles (20*'*, 20*"* ) et la terre.

6. Méthode de commande selon l'une des revendications précédentes, dans laquelle ladite distribution est terminée lorsqu'un conducteur dudit véhicule arrête ladite distribution quand le pourcentage de charge dudit système de batterie dudit véhicule (2) atteint un niveau de charge préréglé, ledit niveau de charge préréglé étant communiqué par ledit véhicule (2) auxdits moyens électroniques (30) via lesdits moyens de communication (31).

7. Méthode de commande selon l'une des revendications précédentes, dans laquelle simultanément à ladite étape de distribution, une pluralité de contrôles de sécurité de ladite distribution sont activés.

8. Méthode de commande selon la revendication 7, dans laquelle ladite pluralité de contrôles de sécurité de ladite distribution comprend un contrôle d'allumage pour lesdits moyens de connexion (10) et ledit élément de connexion (16) via des capteurs respectifs portés par ledit bras mobile (6) communiquant via lesdits moyens de communication (31) avec lesdits moyens électroniques (30), lorsque ledit contrôle est positif, ladite étape de distribution est interrompue par lesdits moyens électroniques (30).

9. Méthode de commande selon la revendication 7, dans laquelle ladite pluralité de contrôles de sécurité de ladite distribution comprend un contrôle d'impact, reçu par ledit véhicule (2) via des capteurs d'accélération portés par ledit bras mobile (6) communiquant via lesdits moyens de communication (31) avec lesdits moyens électroniques (30), lorsque ledit contrôle est positif, ladite étape de distribution est interrompue par lesdits moyens électroniques (30).

10. Méthode de commande selon l'une des revendications précédentes, dans laquelle, avant ledit accouplement entre lesdits moyens de connexion (10) et ledit élément de connexion (16), une étape de nettoyage automatique desdits moyens de connexion (10) et dudit élément de connexion (16) est réalisée.

11. Méthode de commande selon l'une des revendications précédentes, comprenant l'étape supplémentaire de stockage de données relatives à l'utilisation des éléments de ladite station de recharge (1).
